(19) Europäisches Patentamt / European Patent Office / Office européen des brevets

(11) **EP 3 755 743 B1**

(12) **EUROPÄISCHE PATENTSCHRIFT**

(45) Veröffentlichungstag und Bekanntmachung des Hinweises auf die Patenterteilung:
**02.08.2023** **Patentblatt 2023/31**

(21) Anmeldenummer: **19706568.3**

(22) Anmeldetag: **19.02.2019**

(51) Internationale Patentklassifikation (IPC):
**C08J 11/24** *(2006.01)* **C08G 63/78** *(2006.01)*

(52) Gemeinsame Patentklassifikation (CPC):
**C08J 11/24; C08G 63/78;** C08J 2367/02;
Y02W 30/62

(86) Internationale Anmeldenummer:
**PCT/EP2019/054079**

(87) Internationale Veröffentlichungsnummer:
**WO 2019/162265 (29.08.2019 Gazette 2019/35)**

(54) **VORRICHTUNG UND VERFAHREN ZUM EINMISCHEN VON RECYCLINGMATERIAL IN EINE POLYESTERSCHMELZE**

APPARATUS AND METHOD FOR MIXING RECYCLING MATERIAL INTO A POLYESTER MELT

DISPOSITIF ET PROCÉDÉ POUR MÉLANGER UN MATÉRIAU RECYCLÉ DANS UNE MASSE FONDUE DE POLYESTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2018 DE 102018202547**

(43) Veröffentlichungstag der Anmeldung:
**30.12.2020 Patentblatt 2020/53**

(73) Patentinhaber:
• **Uhde Inventa-Fischer GmbH**
  **13509 Berlin (DE)**
• **thyssenkrupp AG**
  **45143 Essen (DE)**

(72) Erfinder:
• **PAWELSKI, Alexander**
  **7012 Felsberg (CH)**
• **HITTORFF, Martin**
  **7402 Bonaduz (CH)**
• **KOCH, Heinrich**
  **14532 Kleinmachnow (DE)**
• **HESS, Christopher**
  **16567 Schönfließ (DE)**

(74) Vertreter: **thyssenkrupp Intellectual Property GmbH**
**ThyssenKrupp Allee 1**
**45143 Essen (DE)**

(56) Entgegenhaltungen:
EP-A1- 0 633 108       EP-A1- 2 489 695
WO-A1-2015/043985       DE-A1- 2 904 020
US-A1- 2007 232 777

**Beschreibung**

Die vorliegende Erfindung betrifft sowohl eine Vorrichtung als auch ein Verfahren zum Einmischen von Altpolyester in eine Polyesterschmelze. Das Verfahren zeichnet sich dadurch aus, dass ein Zwischenproduktstrom aus einer Zwischenstufe eines Frischpolyester-Herstellverfahrens abgezweigt wird, in einem dynamischen Mischer mit Polyester-Rezyklat-Flakes vermischt wird, wobei in dem dynamischen Mischer maximal 60 % der Aufschmelzenergie erzeugt und/oder zugeführt wird, die zum Aufschmelzen aller Polyester-Rezyklat-Flakes erforderlich ist. Die in dieser Weise hergestellte Mischung wird in eine Folgestufe, die stromabwärts der Zwischenstufe angeordnet ist, eingespeist und im weiteren Verfahren bis zu dem gewünschten Polykondensationsgrad umgesetzt. In dieser Weise kann Altpolyester bzw. Polyesterabfall stofflich wiederverwertet werden.

Früher wurden Kunststoffe nach ihrer Nutzungsphase ausschließlich verbrannt. Erst in den letzten Jahren ist man dazu übergegangen, Verfahren zur stofflichen Wiederverwertung der Kunststoffe zu entwickeln. Allerdings sind diese Verfahren bisher unausgereift, da sie entweder Produkte von minderer Qualität hervorbringen oder einen hohen Energiebedarf haben.

In dem Verfahren zur Rückgewinnung von linearem Polyester, das in der EP 0 942 035 A2 beschrieben ist, werden Polyesterabfälle zerkleinert und in einem Extruder geschmolzen. Der Schmelze wird dann das dem Grundbaustein entsprechende Diol zugefügt, so dass ein glykolytischer Abbau stattfinden kann. Anschließend wird die in dieser Weise behandelte Schmelze nachkondensiert. Zwar wirkt diese Verfahrensführung dem Problem entgegen, dass sich die Polyesterabfälle wegen ihrer erhöhten Carboxylendgruppen-konzentration nach dem Aufschmelzen oftmals nicht mehr bis zu den gewünschten Polykondensationsgraden umsetzen lassen, gleichzeitig erfordert diese Verfahrensführung aber auch viel Energie und es besteht keine Möglichkeit, hier eine Wärmeintegration vorzunehmen.

Das Gleiche gilt für das Verfahren, das in der EP 2 021 116 B1 offenbart ist. Hier werden neue Erzeugnisse aus Altpolyester und Frischpolyester hergestellt. Dazu wird Polyesterabfall, nachdem er gewaschen wurde, zunächst in einem Extruder geschmolzen. Dem aufgeschmolzenen Altpolyester wird ebenso wie in der EP 0 942 035 A2 ein Diol zugegeben. Anschließend wird die Schmelze des Altpolyesters mit einer Schmelze von Frischpolyester vermischt. Dadurch, dass Frischpolyester und Altpolyester beide als Schmelzen zusammengeführt werden und dann zusätzlich noch Energie bei der Durchmischung in das System eingetragen wird, kommt es zu einem unnötigen Wärmeüberschuss. Dieser wirkt sich negativ auf die Wärmebilanz des Prozesses aus. Auch die Produktqualität leidet wegen dieser unnötigen Überhitzung.

In JP 2002-249557 A wird ebenfalls ein Verfahren zur Herstellung eines Polyesters unter Verwendung von Polyesterabfall beschrieben. Dabei wird Polyesterabfall aufgeschmolzen und zu einem Slurry aus den Monomeren Terephthalsäure und Ethylenglykol gegeben. Das Aufschmelzen des Polyesterabfalls wird mit Hilfe eines Schmelzextruders realisiert, welcher in der Anschaffung und im Betrieb kostenintensiv ist und den Prozess unwirtschaftlich macht. Weiterhin ist das Verfahren unvorteilhaft, da nach der Zugabe der Altpolyesterschmelze zu dem Slurry keine Schritte zur Homogenisierung vorgesehen sind. Es ist daher davon auszugehen, dass das finale Produkt keine einheitliche Mikrostruktur aufweist und somit nicht annähernd die Produktspezifikationen erfüllt, die für den entsprechenden Frischpolyester vorgegeben sind.

Die EP 1 461 379 B1 schlägt ein Verfahren zur Herstellung von transparentem Polyester für den Lebensmittelbereich vor, in dem Polyesterabfall verwendet wird. Hierbei werden transparente Polyesterabfälle kontinuierlich einem Extruder zugeführt und darin geschmolzen. Die geschmolzenen Polyesterabfälle werden dann in eine frühe Verfahrensstufe einer Frischpolyesterherstellung extrudiert.

Eine weitere Anleitung für ein Verfahren zur stofflichen Verwertung von Altpolyester findet sich in der JP 10101784 A. Auch hier wird zunächst Energie aufgewendet, um kleine Schnitzel eines Altpolyesters in einem Extruder aufzuschmelzen. Die Schmelze aus den Altpolyesterschnitzeln wird dann bei einer Temperatur von 220-260°C in einen Reaktor eingespeist und mit einem Slurry aus den Monomeren für die Frischpolyesterherstellung vermischt.

Ausgehend von dem vorgenannten Stand der Technik ist es Aufgabe der vorliegenden Erfindung, ein Verfahren zur stofflichen Wiederverwertung von Altpolyester anzugeben, das energetisch optimiert ist und mit dem qualitativ hochwertige Produkte hergestellt werden können. Zudem eine Vorrichtung zur Durchführung des Verfahrens bereitgestellt werden, die niedrige Investitions- und Betriebskosten erfordert.

Im Rahmen der vorliegenden Erfindung sind die nachfolgenden Begriffe folgendermaßen zu verstehen.

<u>Frischpolyester:</u>

Frischpolyester wird bevorzugt durch Polykondensation monomerer Edukte hergestellt, insbesondere durch kontinuierliche oder diskontinuierliche Schmelzepolykondensation und ggf. nachfolgende Festphasennachkondensation aus monomeren Edukten (siehe z.B. Polyesterfasern: Chemie und Technologie, Hermann Ludewig, Akademie-Verlag, 2. Auflage, 1974).

Der Begriff Frischpolyester bezeichnet einen Polyester vor seiner bestimmungsgemäßen Nutzungsphase, also das Endprodukt bei der Herstellung von Frischpolyester.

Das Endprodukt kann in Schnitzeln, als Granulat oder in anderen gängigen Formen bereitgestellt werden, wobei Schnitzel und Granulat (zylinderförmige oder kugelförmige Partikel mit mittleren Massen von 10 - 50 mg) besonders gut für die Verarbeitung von Frischpolyester zu Fasern, Filamenten, Verpackungsfolien, Folien oder Verpackungsbehältnissen (z.B. Getränkeflaschen oder Tiefzieh-Folien) geeignet sind.

In stofflicher Hinsicht können unter Frischpolyestern alle bekannten Polyesterarten verstanden werden, insbesondere aber Polyethylenterephthalat (PET) sowie Polybutylenterephthalat (PBT), Polytrimethylenterephthalat (PTT), Polyethylennaphthalat (PEN), Polyethylendicarboxyfuranoat (PEF), Polytrimethylenfuranoat (PTF), Polyethylenfuranoat (PBF) und Polyethylenterephtalat-Glykol (PET-G). Hergestellt werden diese Polyesterarten aus Mischungen, die aromatische oder heteroaromatische Dicarbonsäuren, z.B. Terephthalsäure (PTA), 2,6-Naphthalindicarbonsäure (NDCA) oder 2,5-Furandicarbonsäure (FDCA); und/oder entsprechende Diester, insbesondere entsprechende Di-Methylester; und Diole, wie z.B. Ethylenglykol (EG), 1,3-Propandiol (1,3-PDO), Butandiol (BDO) und 1,4-Cyclohexandimethanol (CHDM); enthalten.

Des Weiteren können Co-Monomere, wie z.B. Isophthalsäure (IPA), Diethylenglykol (DEG) oder aliphatische Dicarbonsäuren, wie z.B. Bernsteinsäure, Adipinsäure etc., bei der Herstellung der Frischpolyester eingesetzt werden. Diese dienen insbesondere dazu, die Eigenschaften des Frischpolyesters gezielt zu modifizieren. Auch Co-Monomere, die während der Herstellung aus den Monomeren entstehen können (z.B. DEG) und Additive wie Katalysatoren, Stabilisatoren, Farbstoffe und Mattierungsmittel können in einem Verfahren zur Herstellung von Frischpolyester vorgesehen sein. Typisch ist beispielsweise der Zusatz von 0,01 - 1 Massenprozent Titandioxid. Alternativ oder zusätzlich können aber auch geringe Mengen an anderen Additiven, wie z.B. Bariumsulfat oder Calciumcarbonat, in der Frischpolyesterherstellung verwendet werden.

Speziell ist unter Frischpolyester ein Polyester zu verstehen, der eine gemäß DIN EN ISO 1628-5 gemessene Viskositätszahl von > 80, bevorzugt von > 100 und besonders bevorzugt von > 120 oder eine gemäß ASTM D-4603-03 gemessene intrinsische Viskosität von > 0,5 dL/g, bevorzugt von > 0,6 dL/g und besonders bevorzugt von > 0,7 dL/g aufweist.

Zwischenprodukt:

Das Zwischenprodukt ist von dem Frischpolyester insofern zu unterscheiden, als es einen geringeren Polykondensationsgrad bzw. eine geringere Viskositätszahl oder intrinsische Viskosität als der Frischpolyester aufweist. Dies ist darauf zurückzuführen, dass das Zwischenprodukt nicht alle Schritte des Frischpolyesterherstellungsverfahrens durchlaufen hat, sondern zuvor abgezweigt worden ist. Die Abzweigung erfolgt dabei in jedem Fall vor dem Filtrationsschritt und vor der Nachkondensation des Präpolymers in dem Endreaktor. Das Zwischenprodukt ist außerdem dadurch gekennzeichnet, dass es als bei einer Temperatur oberhalb seines Schmelzpunktes vorliegt.

Schon prozessbedingt enthält das Zwischenprodukt noch Reste an freiem Diol, bevorzugt Ethylenglykol. Der Anteil an Diol in dem Zwischenprodukt kann aber auch gezielt über die Restkonzentration hinaus erhöht werden, indem dem Zwischenprodukt nach Abzweigen noch Diol zudosiert wird. Ein hoher Anteil von Diol in dem Zwischenprodukt wirkt sich dabei so aus, dass sich die Polyester-Rezyklat-Flakes schneller in dem Zwischenprodukt lösen, da die Wärmekonvektion verbessert ist.

Ein Beispiel für das Zwischenprodukt ist das Veresterungsprodukt, das in der ersten Stufe des Frischpolyesterherstellungsprozesses, in dem Veresterungsreaktor, anfällt. Es weist einen Polykondensationsgrad von 1 bis 6 auf.

Ein weiteres Beispiel für das Zwischenprodukt ist das Nachveresterungsprodukt, das in der zweiten Stufe des Frischpolyesterherstellungsprozesses, dem Nachveresterungsreaktor, anfällt. Es weist einen Polykondensationsgrad von 4 bis 12 auf.

Ein drittes Beispiel für das Zwischenprodukt ist das Präpolymer, das in der dritten Stufe des Frischpolyesterherstellungsprozesses, dem Präpolymerisationsreaktor, anfällt. Es weist einen Polykondensationsgrad von 20 bis 50 auf.

Polyester-Rezyklat:

Unmittelbar im Anschluss an die Herstellung von Frischpolyester wird der Frischpolyester mittels eines oder mehrerer Schritte zu Fasern, Filamenten, Folien, Formkörpern oder Verpackungsbehältnissen (insbesondere zu Getränkeflaschen) verarbeitet. Hierzu werden die Frischpolyester-granulate oder -schnitzel meist erneut in die Schmelzphase überführt und eventuell werden dem Frischpolyester kleine Mengen an Verarbeitungshilfsstoffen zugegeben.

Als Polyester-Rezyklat wird hierbei einerseits der Ausschuss bei der Weiterverarbeitung des Frischpolyesters bezeichnet. Den weitaus größten Teil des Polyester-Rezyklats macht aber der Polyesterabfall aus, der nach der Nutzungsphase des verarbeiteten Polyesters, z.B. nach der Nutzung als Textil, Getränkeflasche und Verpackungsfolie, anfällt.

Bevorzugt ist das Polyester-Rezyklat gereinigter Polyesterabfall, der von gegebenenfalls anteiligen Fremdstoffen und anhaftenden Verschmutzungen befreit ist. Für die Reinigung eigenen sich verschiedene Verfahren: Zunächst kann der Polyesterabfall gewaschen werden. Als Waschflüssigkeit kommt Wasser oder Wasser mit waschaktiven Substanzen in Frage. Ebenso kann mit verschiedenen Lösungsmitteln zum (Ab/Auf-)Lösen von Verunreinigungen gewaschen werden. Des Weiteren können physikalische Trennmethoden zum Abtrennen von Fremdstoffen zum Einsatz kommen. Um Fremdstoffe mit einer höheren oder niedrigeren spezifischen Dichte als der Altpolyester zu trennen, werden Trennverfahren wie Flotation, Windsichten oder Zentrifugation durchgeführt. Auch die Abtrennung von Verunreinigungen im Polyester-Rezyklat durch Nutzung spezifischer Eigenschaften ist denkbar. Magnetische Stoffe können mittels eines Magneten und farbige Verunreinigungen mechanisch mittels sogenannter Sorter entfernt werden.

Polyester-Rezyklat wird vorzugsweise in Form von Polyester-Rezyklat-Flakes bereitgestellt. Dies sind zerkleinerte Partikel des Polyesterabfalls, die typischerweise durch Schreddern oder Mahlen von Polyester-Rezyklat erhalten werden. Die Polyester-Rezyklat-Flakes weisen bevorzugt eine runde oder längliche Form auf, deren Dicke in einer Dimension kleiner als 1 mm, vorzugsweise kleiner als 0,5 mm, ist und deren Länge in einer anderen Dimension kleiner als 50 mm, bevorzugt kleiner als 30 mm, ist. Die mittlere Partikelgröße $d_{90}$ der Polyester-Rezyklat-Flakes beträgt vorteilhafterweise von 4 bis 10 mm, so dass sie sich rasch in einer Schmelze oder flüssige Phase verteilen lassen.

Ein typisches Beispiel für Polyester-Rezyklat-Flakes sind sogenannte "Post Consumer Recycling"-Flakes (PCR-Flakes), z.B. aus wiedereingesammelten PET-Getränkeflaschen. Eine typische Spezifikation für solche Flakes - ohne die Bedeutung der Polyester-Rezyklat-Flakes im Sinne der Erfindung darauf beschränken zu wollen - ist nachfolgend aufgeführt:

|  |  |
|---|---|
| - Durchmesser Flakes maximal: | 20 mm |
| - Anteil Flakes mit Durchmesser von 4 bis 10 mm: | > 95 Gew.-% |
| - Anteil Flakes mit Durchmesser von maximal 0,5 mm: | < 0,5 Gew.-% |
| - Anteil an Blue Flakes: | < 5,0 Gew.-% |
| - Anteil an gefärbten Flakes: | < 0,05 Gew.-% |
| - Farbwerte (nach Kristallisation 2h@150°C) | L* > 70 |
|  | b* < 3 |
| - Wassergehalt: | < 0,7 wt.% |
| - PVC-Gehalt: | < 10 ppm |
| - Metallgehalt (z.B. Al, Fe, Zn): | < 5 ppm |
| - HDPE/LDPE/PP-Gehalt: | < 25 ppm |
| - Klebstoff-Gehalt: | < 20 ppm |
| - Weitere unlösliche Stoffe (z.B. Papier, Metall, Silikone): | < 100 ppm |

Dynamischer Mischer:

Der dynamische Mischer ist eine Vorrichtung, mit der mehrere Ausgangsstoffe mit unterschiedlichen Eigenschaften zu einer Stoffmischung vereint werden, wobei die Stoffmischung eine hohe Homogenität aufweist.

In der vorliegenden Erfindung wird der dynamische Mischer zum homogenen Einmischen der Polyester-Rezyklat-Flakes in ein Zwischenprodukt genutzt. Die Mischwerkzeuge des dynamischen Mischers beschleunigen das Mischgut idealerweise so, dass sich Intensität und Richtung des Krafteintrags ständig ändern. Wenn dies nicht der Fall ist, spricht man von einem Rührer. Ein Rührer dient im Gegensatz zu einem dynamischen Mischer nur dazu, einen Stoff in Bewegung zu bringen und in Bewegung zu halten und Sedimentation zu verhindern.

Mittels des dynamischen Mischers werden zwei unterschiedliche Phasen zu einer homogenen Mischung (z.B. Suspension) verarbeitet. Der dynamische Mischer bringt die zu vermischenden Phasen in guten Kontakt miteinander und bewirkt, dass sich fortwährend eine große, sich ständig erneuernde Oberfläche zwischen den Phasen bildet.

Der dynamische Mischer wird bevorzugt kontinuierlich betrieben, es ist aber auch quasi-kontinuierlicher oder batchweiser Betrieb möglich.

Unter einem dynamischen Mischer wird ein Inline-Mischer verstanden. Klassische Rohrmischer und Trommelmischer sind von der Definition eines dynamischen Mischers ausgenommen.

Weiterhin sind statische Mischer, die ohne bewegliche Teile konstruiert sind, von der Definition eines dynamischen Mischers ausgeschlossen. Die Energie zur Verbesserung der Mischung muss bei einem statischen Mischer extern (z.B. durch eine Pumpe) aufgebracht werden. Der Druckverlust am statischen Mischer wird in Reibungsenergie umgesetzt, die dazu genutzt wird, die Mischgüte zu verbessern.

Zuletzt soll von der Definition eines dynamischen Mischers auch ein Extruder ausgenommen sein, dessen Hauptaufgabe das Aufschmelzen eines Stoffes oder einer Stoffmischung ist, dadurch dass Energie in Form von innerer Reibung innerhalb des Stoffes und Reibung zwischen dem Stoff und den Extruderelementen oder dem Extrudergehäuse an den Stoff übertragen wird.

Der dynamische Mischer weist bevorzugt eine horizontale Bauart auf.

In der Mischkammer des dynamischen Mischers kann sich ein Mehrwellenmischer befinden. Bevorzugt ist aber ein Einwellenmischer mit oder ohne Wellenbrecher.

Der dynamische Mischer kann als Flügel-, Paddel-, Schaufel-, Stachel-, Impeller-, Propeller-, Turbinen-, Anker-, Schleuder, Zahnscheiben- oder Turbo-Mischer ausgestaltet sein. Bevorzugt ist die Ausführungsform als Turbo-Mischer.

Das Mischwerk des dynamischen Mischers kann mit einer hohen Drehzahl gedreht werden und ermöglicht das Entstehen von turbulenten Strömungen. Angetrieben wird das Mischwerk durch einen Motor, bevorzugt bis zu einer Drehzahl von > 300 Umdrehungen pro Minute, besonders bevorzugt > 500 Umdrehungen pro Minute, insbesondere > 1000 Umdrehungen pro Minute.

Der dynamische Mischer kann eine elektrische Heizung und/oder einen Wärmetauscher umfassen, z.B. in Form eines flüssigkeits- oder dampfbeheizten Doppelmantels.

Fernerhin ist es bevorzugt wenn der dynamische Mischer eine Eintrittsöffnung für die Schmelze des Zwischenprodukts der Frischpolyesterherstellung aufweist sowie eine Eintrittsöffnung für die Polyester-Rezyklat-Flakes mit jeweils davor geschalteten Zuführorganen. Die Eintrittsöffnung für die Polyester-Rezyklat-Flakes ist besonders bevorzugt redundant (zweifach) vorgesehen, um den Prozess im Falle der Verstopfung weiter betreiben zu können. In einer Ausführungsvariante kann der dynamische Mischer zusätzlich auch eine Eintrittsöffnung für die Diolzugabe umfassen.

Fernerhin kann der dynamische Mischer eine Öffnung bzw. einen Stutzen für das Anlegen von Vakuum enthalten. Außerdem umfasst der dynamische Mischer eine Öffnung für den Austritt der Mischung aus Polyester-Rezyklat-Flakes und Zwischenprodukt.

Die Welle des Motors, mit der das Mischwerk angetrieben wird, weist bevorzugt eine abgedichteten Durchführung oder eine magnetischen Kupplung auf.

Ein Tausch des Mischwerks wird bevorzugt dadurch ermöglich, dass der dynamische Mischer aus mindestens zwei Teilen besteht, die voneinander gelöst werden können.

Bevorzugt wird der dynamische Mischer bei einer Temperatur von bis zu 10 K, bevorzugt von bis zu 20 K und besonders bevorzugt von bis zu 30 K oberhalb des Schmelzpunktes des Frischpolyesters betrieben.

Bevorzugt wird der dynamische Mischer bei einem maximalen Druck von bis zu 5 bara, besonders bevorzugt bei atmosphärischem Druck, ganz besonders bevorzugt unter Vakuum (500 - 10 mbara) betrieben.

Das erfindungsgemäße Verfahren zur Herstellung eines Polyesters unter Verwendung von Polyester-Rezyklat-Flakes umfasst die folgenden Schritte:

i. Abzweigen eines Zwischenproduktstroms aus einer Zwischenstufe eines Frischpolyester-Herstellverfahrens;

ii. Mischen des Zwischenproduktstroms mit Polyester-Rezyklat-Flakes in einem dynamischen Mischer;

iii. Einspeisen der Mischung in eine Folgestufe, die stromabwärts der Zwischenstufe angeordnet ist und / oder Rückführen der Mischung in diejenige Reaktionsstufe, aus der der Zwischenproduktstrom in Schritt i) entnommen wurde;

iv. Umsetzen der Mischung bis zu einem gewünschten Polykondensationsgrad;

wobei in Schritt ii) maximal 60 % der Aufschmelzenergie erzeugt und/oder zugeführt wird, die zum Aufschmelzen aller Polyester-Rezyklat-Flakes erforderlich ist.

Bevorzugt ist, wenn maximal 50 % der Aufschmelzenergie, die zum Aufschmelzen aller Polyester-Rezyklat-Flakes erforderlich ist, beim Mischen des Zwischenproduktstroms mit den Polyester-Rezyklat-Flakes erzeugt und/oder zugeführt wird.

Besonders bevorzugt werden maximal 30 % der Aufschmelzenergie, die zum Aufschmelzen aller Polyester-Rezyklat-Flakes erforderlich ist, beim Mischen des Zwischenproduktstroms mit den Polyester-Rezyklat-Flakes erzeugt und/oder zugeführt.

Die Aufschmelzenergie der Flakes entspricht dabei der Enthalpie ΔH, welche mit Hilfe der nachfolgenden Formel (I) berechnet werden kann.

$$\Delta H = \int_{T_0}^{T_m} C_p(T)dT + \Delta H_m \qquad (I)$$

Dabei stellt $C_p$ die Wärmekapazität aller Flakes in *J/K* dar, $T_0$ die Temperatur der Flakes bei Eintritt in den dynamischen Mischer, $T_m$ die Schmelztemperatur der Flakes und $\Delta H_m$ die Schmelzenthalpie aller Flakes in *J*.

Durch die erfindungsgemäße Verfahrensführung beschränkt sich der Eintrag der Energie, der zum Aufschmelzen der Flakes erforderlich ist, nicht nur auf den Verfahrensschritt des Mischens. Der Energieeintrag kann über mehrere Verfahrensschritte verteilt stattfinden.

Eine Überhitzung von Zwischenprodukt und/oder Polyester-Rezyklat-Flakes in dem Mischer kann in dieser Weise verhindert werden.

Bevorzugt beträgt die Temperaturerhöhung zwischen der theoretischen Mischungstemperatur am Eingang des Mischers und der theoretischen Mischungstemperatur am Ausgang maximal 10 K.

Vorzugsweise weisen die Polyester-Rezyklat-Flakes bei Eintritt in den dynamischen Mischer eine mittlere Temperatur von 0 bis 200°C, bevorzugt von 30 bis 180°C, besonders bevorzugt von 100 bis 150°C auf.

Dem Zwischenproduktstrom kann bei dem erfindungsgemäßen Verfahren vor Schritt ii) mindestens 40 % der Aufschmelzenergie zugeführt werden. In diesem Fall ist die Verweilzeit in dem dynamischen Mischer, aber so kurz, dass der Zwischenproduktstrom in dem dynamischen Mischer weniger als 40 % der Aufschmelzenergie an die Polyester-Rezyklat-Flakes übertragen kann.

Bevorzugt wird der Mischung nach Schritt ii) mindestens 40 % der Aufschmelzenergie zugeführt.

Die Verweildauer des Zwischenproduktstroms und der Polyester-Rezyklat-Flakes in dem dynamischen Mischer beträgt bevorzugt maximal 60 Sekunden, besonders bevorzugt maximal 40 Sekunden, ganz besonders bevorzugt maximal 30 Sekunden, insbesondere maximal 20 Sekunden.

In einer Variante des Verfahrens wird Schritt ii) bei einem absoluten Druck von 3 bis 100 mbar, bevorzugt von 20 bis 50 mbar, durchgeführt.

In einer weiteren Ausführungsform wird die Mischung vor Erreichen des gewünschten Polykondensationsgrads, bevorzugt zu einem Zeitpunkt, an dem die Mischung eine gemäß ASTM D-4603-03 gemessene intrinsische Viskosität von 0,25 bis 0,4 dL/g aufweist, filtriert, wobei bevorzugt Schwebstoffe mit einer Größe von 5 bis 100 $\mu$m, insbesondere Schwebstoffe mit einer Größe von 10 bis 60 $\mu$m, abgetrennt werden.

Der gewünschte Polykondensationsgrad kann bei dem erfindungsgemäßen Verfahren 100 bis 200, bevorzugt 120 bis 150, betragen: Die bis zu dem gewünschten Polykondensationsgrad umgesetzte Mischung kann eine gemäß ASTM D-4603-03 gemessene intrinsische Viskosität von 0,6 bis 0,9 dL/g aufweisen.

Bevorzugt werden in Schritt i) 10 bis 100 % des gesamten Stroms in der Zwischenstufe als Zwischenproduktstrom abgezweigt.

Vorteilhafterweise enthält der Zwischenproduktstrom ein Diol, bevorzugt Ethylenglykol, besonders bevorzugt in einem Anteil von 0 bis 0,8 Gew.-% , insbesondere in einem Anteil von 0 - 0,4 Gew.- %.

Die Mischung kann 5 bis 60 Gew.-%, bevorzugt 10 bis 40 Gew.-% Polyester-Rezyklat-Flakes enthalten. Das bedeutet, dass die Polyester-Rezyklat-Flakes in einem Massenverhältnis von 5:95 bis 60:40, bevorzugt von 10:90 bis 40:60, bezogen auf den Zwischenproduktstrom in den dynamischen Mischer dosiert werden können.

In einer weiteren Ausführungsvariante des Verfahrens werden der Zwischenproduktstrom und die Polyester-Rezyklat-Flakes im dynamischen Mischer zusätzlich noch mit einem Additiv ausgewählt aus der Gruppe bestehend aus Katalysatoren, Stabilisatoren, Farbstoffen, Mattierungsmitteln, optischen Aufhellern und Mischungen hiervon, gemischt, wobei das Additiv in einem Anteil von maximal 5 Gew.-% bezogen auf die resultierende Mischung eingesetzt wird.

Die erfindungsgemäße Vorrichtung zur Herstellung eines Polyesters unter Verwendung von Polyester-Rezyklat-Flakes umfasst

- eine Vorrichtung zur Herstellung von Frischpolyester mit mehreren aufeinanderfolgenden Reaktionsbehältern und

- einen dynamischen Mischer,

wobei der dynamische Mischer mindestens zwei Einlässe aufweist, von denen ein erster Einlass mit einem ersten Reaktionsbehälter verbunden ist und ein zweiter Einlass mit einer Vorrichtung zur Dosierung von Schüttgut verbunden ist, und wobei ein Auslass des dynamischen Mischers mit einem zweiten nachfolgenden Reaktionsbehälter verbunden ist.

In einer ersten Ausführungsform umfasst die Vorrichtung weiterhin eine Apparatur zum Zerkleinern von Polyester-Rezyklat, die der Vorrichtung zur Dosierung von Schüttgut vorgeschaltet ist.

Bevorzugt umfasst die Vorrichtung weiterhin mindestens einen Wärmetauscher, wobei ein erster Wärmetauscher bevorzugt zwischen der Apparatur zum Zerkleinern von Polyester-Rezyklat und der Vorrichtung zur Dosierung von Schüttgut angeordnet ist und ein zweiter Wärmetauscher bevorzugt zwischen dem ersten Reaktionsbehälter und dem dynamischen Mischer angeordnet ist.

Vorzugsweise ist mindestens eine Vorrichtung zur Erzeugung eines Vakuums an den dynamischen Mischer angeschlossen.

Erfindungsgemäß wird die oben beschriebene Vorrichtung zur stofflichen Verwertung von Polyesterabfällen verwendet.

Die nachfolgenden experimentellen Beispiele sollen als technologischer Hintergrund für die vorliegende Erfindung gelten und das Verständnis der Erfindung erleichtern.

Analyse/Methoden

Das Aufschmelzen von PET-Rezyklat-Flakes in der Schmelze wird visuell bestimmt. Ein vollständiges Auflösen im Sinne der Erfindung bedeutet, dass pro 100 Stück der zugegebenen PET-Rezyklat-Flakes nicht mehr als 1 Stück mit bloßem Auge in der Schmelze des Zwischenproduktes detektiert werden kann. Gleichermaßen wird angenommen, dass sich die PET-Rezyklat-Flakes in der Schmelze vollständig aufgelöst haben, wenn bei einer Heißfiltration der erhaltenen Mischung über ein geeignetes Sieb mit einer maximalen Maschenweite von 250 μm maximal 1 von 100 Stück der PET-Rezyklat-Flakes zurückgehalten werden. Ausgenommen hiervon sind Fremdpartikel im Polyester-Rezyklat (Metallspäne, Erde, Sand, Papier, Polymere mit einer anderen chemischen Zusammensetzung etc.) die sich nicht bzw. nicht unter den gewählten Bedingungen lösen bzw. nicht in eine flüssige Phase übergehen.

Die Bestimmung der intrinsischen Viskosität (i.V.) von Polyethylenterephthalat erfolgt gemäß ASTM 4603 - 03. Hierfür wird der Polyester im Lösungsmittelgemisch Phenol/Tetrachlorethan (Massenverhältnis 6:4) in einer Konzentration $C$ von 0,5 g/dL gelöst und anschließend in einem Kapillarviskosimeter DIN-Typ 1a (Kapillardurchmesser 0,95 mm) bei 30,0°C die Durchflusszeit bestimmt. Die relative Lösungsviskosität $\eta_{rel}$ wird ermittelt aus der Durchflusszeit der Lösung $t$ [s] und der Durchflusszeit des reinen Lösungsmittels $t_0$ [s]:

$$\eta_{rel} = t/t_0$$

Die intrinsische Viskosität $I.V.$ [dL/g] berechnet sich aus der relativen Lösungsviskosität $\eta_{rel}$ und der Konzentration C [g/dL] zu:

$$i.V. = 0{,}25(\eta_{rel} - 1 + 3 \cdot \ln \eta_{rel})/C$$

Vorbereitung

Als Vorbereitung für die Versuche wurde ein Veresterungsprodukt hergestellt. Außerdem wurden Polyester-Rezyklat-Flakes vorbehandelt.

1) Mit Hilfe der kontinuierlich betriebenen Vorrichtung gemäß EP 1 448 658 wurde ein Veresterungsprodukt aus Terephthalsäure und Ethlylenglykol (Molverhältnis = 1 : 1,75) bei einer Veresterungstemperatur von 260°C und einem Druck von 2,6 bar sowie einer mittleren Verweilzeit von 90 Minuten mit Zusatz des Katalysators Antimonglykolat für eine Menge von 250 ppm Antimon im finalen PET hergestellt. Über ein Probenahmeventil wurde das Veresterungsprodukt (nachfolgend "VP$_0$") in flüssiger Form entnommen und nach dem Abkühlen in einer Blechwanne grob zerkleinert. Der Umsatzgrad (Anteil der reagierten Terephthalsäureeinheiten) von VP$_0$ betrugt 94,5% und der Gehalt an freien Säureendgruppen betrugt 820 mmol/kg.

2) Post Consumer Recycling-PET Flakes (PET-Rezyklat-Flakes; Fa. Wellmann, NL; Farbe: L* = 54,3; a* = -3,1; b* = -2,6; Schüttdichte ca. 270 kg/m³) wurden in einem Umlufttrockenschrank über einen Zeitraum von 2 Stunden vorgetrocknet und dabei auf eine Temperatur von 170°C erwärmt. Es wurde kein Verbacken oder Agglomerieren der Flakes bei dieser Behandlung festgestellt.

Versuch 1 mit Recycling von PET-Rezyklat-Flakes

In einem 500 mL Dreihalskolben versehen mit einem wandgängigen Paddelrührer, einem Stutzen für eine Gaszuleitung und einer Gasableitung sowie einem Thermometer wurden 241,5 g VP$_0$ vorgelegt und unter Stickstoff-Überleitung mittels eines elektrisch betriebenen Heizpilzes aufgeschmolzen. Nach dem Aufschmelzen wurde der Rührer eingeschaltet (300 Umdrehungen pro Minute) und die Schmelze weiter auf 290°C aufgeheizt.

Mit Hilfe eines Trichters wurden über einen Zeitraum von 30 Sekunden 24,4 g der erwärmten PET-Rezyklat-Flakes zu der Schmelze in dem Dreihalskolben gegeben. Dabei sank die Temperatur der Schmelze auf ca. 285°C ab. Nach 60 Sekunden waren > 95% der Flakes aufgeschmolzen und homogen in der flüssigen Schmelzephase verteilt. Nach weiteren 60 Sekunden waren > 99% der Flakes aufgeschmolzen und homogen in der Schmelze verteilt. 180 Sekunden nach beendeter Zugabe der Flakes wurde die Schmelze aus dem Dreihalskolben in eine Aluminiumschale gegossen und dort abgekühlt (VP$_0$ mit PET-Flakes; Produkt M1).

In eine Glas-Polykondensations-Apparatur (ca. 300 mL, versehen mit einem seitlich angebrachten Gaseinleitungsstutzen sowie mit einem Wendelrührer) wurden 60 g des abgekühlten und grob zerkleinerten Produkts M1 gefüllt und mit Hilfe eines elektrisch betriebenen Heizmantels erwärmt. Nach dem Aufschmelzen des Produkts M1 wurde der Rührer einschaltet (150 Umdrehungen pro Minute) und die Schmelze auf 280°C aufgeheizt und bei dieser Temperatur gehalten. Anschließend wurde der Druck in der Apparatur durch Anlegen von Vakuum auf 600 mbar abgesenkt und dort gehalten. 45 Minuten nach Beginn des Anlegens des Vakuums wurde die Apparatur kurzzeitig mit Stickstoff belüftet und eine Probe (Probe "PE") entnommen.

Anschließend wurden 10 μL des Stabilisators Triethylphosphat zugegeben sowie der Druck in der Apparatur durch Anlegen von Vakuum auf 30 mbar abgesenkt und dort gehalten. Nach weiteren 45 Minuten wurde die Apparatur kurzzeitig mit Stickstoff belüftet und eine weitere Probe (Probe "PP") entnommen.

Anschließend wurde der Druck in der Apparatur durch Anlegen von Vakuum auf 1,0 mbar abgesenkt und während dieser Polykondensationsphase für 5 Stunden gehalten. Jeweils nach 60 Minuten wurde die Apparatur kurzzeitig mit Stickstoff belüftet und dabei jeweils eine Probe entnommen (Proben "PET1", "PET2", PET3, PET4" und "PET5", nach 1 bis 5 Stunden entnommen).

Versuch 2 ohne Recycling

Als Vergleichsbeispiel wurde ein zu Versuch 1 identischer Versuch mit 60 g des direkt aus der Pilotanlage erhaltenen Veresterungsproduktes $VP_0$ durchgeführt.

Versuchsergebnisse

Bei allen Proben wurde die intrinsische Lösungsviskosität i.V. gem. ASTM D-4603-03 bestimmt.

Tabelle 1: Versuchsergebnisse von Versuch 1 und Vergleichsversuch 2

|  | Versuch 1 i.V. [dL/g] | Versuch 2 i.V. [dL/g] |
|---|---|---|
| PE | 0,12 | 0,11 |
| PP | 0,22 | 0,17 |
| PET1 | 0,57 | 0,39 |
| PET2 | 0,70 | 0,59 |
| PET3 | 0,58 | 0,70 |
| PET4 | 0,51 | 0,71 |
| PET5 | 0,46 | 0,62 |

Es zeigt sich, dass nach Zugabe und Einmischen der Flakes in die Schmelze des Veresterungsproduktes $VP_0$ in den nachfolgenden Verfahrensstufen nach kürzeren Zeiten bereits eine höhere intrinsische Viskosität gemessen wird, als beim identisch behandelten, Veresterungsprodukt $VP_0$ ohne Zugabe von PCR-Flakes. Dies bedeutet, dass durch Zugabe der Flakes während der Herstellung von PET ein Endprodukt vorgegebener Viskosität schneller erreicht werden kann, als ohne Zugabe der Flakes. PET-Produktionsanlagen können somit bei Zugabe von PCR-Flakes wirtschaftlicher (geringere Verweilzeit) sowie mit höherem Durchsatz betrieben werden. Die erhaltenen Endprodukte sind bezüglich der für die weitere Verarbeitung maßgeblichen Eigenschaften Lösungsviskosität (sowie dem Gehalt an COOH-Endgruppen) identisch zu einem PET hergestellt ohne Flake-Zugabe. Die Farbe des PET-Endproduktes nach Zugabe von Flakes zum Veresterungsprodukt wird hingegen durch Art und Menge der zugegebenen Flakes beeinflusst. Dies kann aber durch entsprechende Farbkorrekturmaßnahmen weitestgehend kompensiert werden.

Versuch 3, Erhöhen des Anteils an Rezyklat-Flakes:

In einem 500 mL Dreihalskolben versehen mit einem wandgängigen Paddelrührer, einem Stutzen für eine Gaszuleitung und einer Gasableitung sowie einem Thermometer wurden 266,6 g $VP_0$ vorgelegt und unter Stickstoffüberleitung mittels eines elektrisch betriebenen Heizpilzes aufgeschmolzen. Nach dem Aufschmelzen wurde der Rührer einschaltet (300 Umdrehungen pro Minute) und die Schmelze weiter auf 290°C aufgeheizt.

Mit Hilfe eines Trichters wurden über einen Zeitraum von 60 Sekunden 144,1 g der erwärmten PET-Rezyklat-Flakes zu der Schmelze in dem Dreihalskolben gegeben. Dabei sank die Temperatur der Schmelze auf ca. 283°C ab. 60 Sekunden nach Ende der Zugabe waren > 90% der Flakes aufgeschmolzen und homogen in der flüssigen Schmelzephase verteilt. Nach weiteren 60 Sekunden waren > 99% der Flakes aufgeschmolzen und homogen in der Schmelze verteilt. 180 Sekunden nach beendeter Zugabe der Flakes wurde die Schmelze aus dem Kolben in eine Aluminiumschale gegossen und dort abgekühlt (Produkt M3).

Es zeigt sich, dass auch große Anteile (hier 144,1 g Flakes in 266,6 g Veresterungsprodukt entsprechend einem Anteil von 1:1,85 bzw. 35,1% in der Monomerschmelze) rasch und vollständig in der $VP_0$-Schmelze aufgeschmolzen und gelöst werden können.

Versuch 4 Recycling mit Farbkorrektur:

In einem 500 mL Dreihalskolben versehen mit einem wandgängigen Paddelrührer, einem Stutzen für eine Gaszuleitung und einer Gasableitung sowie einem Thermometer wurden 241,2 g $VP_0$ vorgelegt und unter StickstoffÜberleitung mittels eines elektrisch betriebenen Heizpilzes aufgeschmolzen. Nach dem Aufschmelzen wurde der Rührer einschaltet (300 Umdrehungen pro Minute) und die Schmelze weiter auf 290°C aufgeheizt. Anschließend wurde 2,0 g Ethylenglykol zusammen mit 0,5 mg aufgeschlämmtem Blaufarbstoff Estofil Blue S-RBL (Solvent Blue 104; Hersteller Fa. Clariant, CH) zugegeben.

Mit Hilfe eines Trichters wurden über einen Zeitraum von 30 Sekunden 24,5 g der erwärmten PET-Rezyklat-Flakes zu der Schmelze in dem Dreihalskolben gegeben. Nach 60 Sekunden waren > 90 % der Flakes aufgeschmolzen und homogen in der flüssigen Schmelzephase verteilt; innerhalb von weiteren 60 Sekunden waren > 99% der Flakes aufgeschmolzen und homogen in der Schmelze verteilt. 180 Sekunden nach beendeter Zugabe der Flakes wurde die Schmelze aus dem Kolben in eine Aluminiumschale gegossen und dort abgekühlt (Produkt M4).

Das Produkt M1 und das Produkt M4 wurden jeweils einer Zentrifugalmuühle ZM 200 (Hersteller Fa. Retsch, DE) mit einem 12-zähnigen Steckrotor und einem installierten Ringsieb mit Trapezlochung D = 0,75 mm zugeführt und zu einem Pulver zerkleinert. Anschließend wurde die Farbe des Pulvers in einer Quarzglasküvette für das CIE-L\*a\*b\*-Farbsystem mit einem Farbmessgerät CM-3500d (Hersteller Konica-Minolta, JP) bei Normlichtart D65 ermittelt.

Tabelle 2: Vergleich der Farbwerte vor und nach Farbkorrektur

| Produkt | L\*-Farbe (Helligkeit) | b\*-Farbe (Gelb/Blau-Farbe) |
|---------|------------------------|------------------------------|
| M1      | 95,1                   | +2,5                         |
| M4      | 93,8                   | -1,8                         |

Es zeigt sich, dass sich die Farbe eines Produktes, das bei der Herstellung von Polyester unter Verwendung von Polyester-Rezyklat-Flakes entsteht, durch die Zugabe eines in einem Diol verteilten Farbstoffes beeinflussen und damit korrigieren lässt. Durch die Zugabe eines Blaufarbstoffes kann ein Gelbstich (positiver b\*-Wert) ausgeglichen und eine neutrale Farbe erzielt werden. Die Farbkorrektur ist dabei nicht nur direkt nach der Farbzugabe wirksam, sondern beeinflusst auch das Endprodukt des Recycling-Polyesterherstellungsprozesse in entsprechender Weise.

Das erfindungsgemäße Verfahren soll anhand der nachfolgenden Beispiele und Figuren näher erläutert werden, ohne die Erfindung darauf zu beschränken.

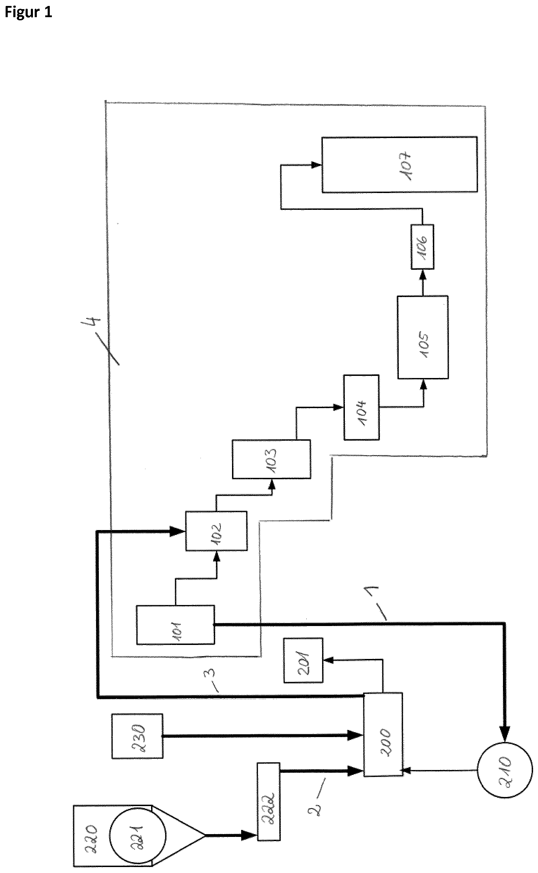

Figur 1 zeigt ein Fließbild für eine erste Ausführungsvariante des erfindungsgemäßen Verfahrens, bei dem der Zwischenproduktstrom aus dem Veresterungsreaktor abgezweigt wird und demnach aus dem Veresterungsprodukt mit einem Polykondensationsgrad von 1 bis 6 besteht.

Bei der ersten Ausführungsvariante in Fig. 1 wird zumindest ein Teil eines Veresterungsproduktstroms aus einem Veresterungsreaktor 101 als Zwischenproduktstrom 1 abgezweigt. Dieser Zwischenproduktstrom 1 wird durch einen Wärmetauscher 210 geleitet und anschließend einem dynamischen Mischer 200 zugeführt. Neben dem Zwischenproduktstrom 1 hat der Mischer noch einen zweiten Eingangsstrom, den Polyester-Rezyklat-Strom 2. Der Polyester-Rezyklat-Strom 2 speist sich aus einem Vorratsbehälter oder einem Silo 220. Das Polyester-Rezyklat kann dabei mit einem Vorwärmer 221 in Kontakt gebracht werden, wobei der Vorwärmer entweder eine separate Einheit oder Teil des Silos 220 ist. Die Dosierung und damit die Einstellung des Verhältnisses von Polyester-Rezyklat zu Zwischenprodukt erfolgt mit Hilfe der Dosiervorrichtung 222. Optional vorgesehen ist auch noch ein weiterer Eingangsstrom 230 in den dynamischer Mischer 200, der an einer beliebigen Position des Mischeraußenmantels angeordnet ist. Über diesen Eingangsstrom 230 können Additive und/oder monomeres Diol in den dynamischen Mischer 200 eingebracht werden. Eine Vakuumvorrichtung 201 sorgt für eine gewünschte Druckreduzierung in dem dynamischen Mischer 200.

Nach einer kurzen Verweildauer der Eingangsströme im dynamischen Mischer, entsteht eine Mischung 3, in der die Rezyklat-Partikel homogen in dem Zwischenprodukt verteilt sind, sich aber noch nicht vollständig aufgelöst haben (homogene Konzentrationsverteilung aber keine einheitliche, konstante Temperatur).

Die Mischung wird dann in eine weitere Reaktoreinheit der Frischpolyesteranlage 4, nämlich in den Nachveresterungsreaktor 102, eingeleitet. Die Nachveresterung im Nachveresterungsreaktor 102 bildet in der Frischpolyesteranlage die Folgestufe der Veresterung im Veresterungsreaktor 101.

Anders als in den Ausführungsbeispielen dargestellt, kann die Mischung 3 auch in die gleiche Reaktorstufe zurückgeführt werden, aus der zuvor der Zwischenproduktstrom 1 entnommen wurde, also in dem Beispiel gemäß Figur 1 in die Reaktorstufe 101, in dem Beispiel gemäß Figur 2 in die Reaktorstufe 102 und in dem Beispiel gemäß Figur 3 in die Reaktorstufe 103. Hierbei ist die Rückführung in die Reaktorstufe 101 besonders bevorzugt, weil in dieser besonders vorteilhafte Bedingungen herrschen in Bezug auf die Durchmischung des Reaktorinhalts, die Verweilzeit in dieser Reaktorstufe und die sehr große Wärmetauschfläche, die in dieser Reaktorstufe zur Verfügung steht.

Die weitere Umsetzung der Mischung bis zu höheren Molekulargewichten erfolgt in einem Präpolykondensationsreaktor 103, welcher die letzte Verfahrensstufe vor der Filtriervorrichtung 104 bildet. Eine Kondensation bis zu dem gewünschten Polymerisationsgrad findet nach Passieren der Filtervorrichtung 104 in dem Endreaktor 104 statt. Die Schmelze kann dann in einem Granulator 105 zu kleinen Pellets verarbeitet und in einem Silo 107 gelagert werden.

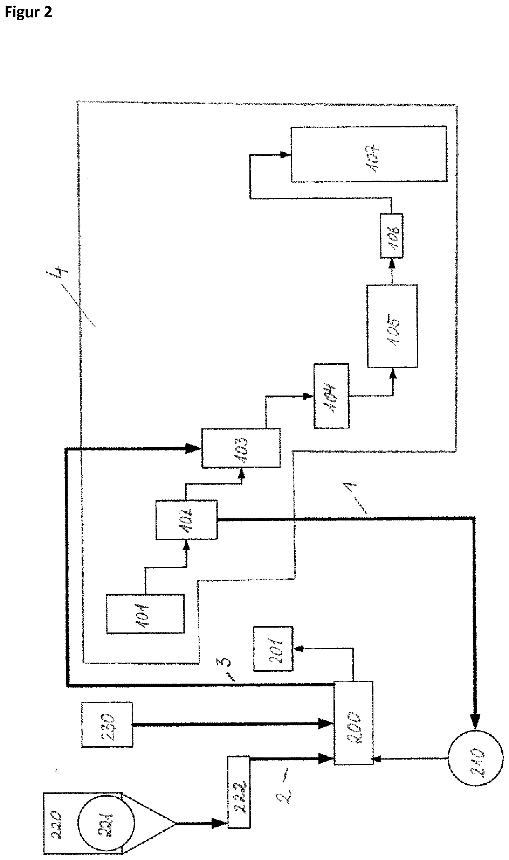

Figur 2 zeigt ein Fließbild für eine zweite Ausführungsvariante des erfindungsgemäßen Verfahrens, bei dem der Zwischenproduktstrom aus dem Nachveresterungsreaktor abgezweigt wird und demnach aus dem Nachveresterungsprodukt mit einem Polykondensationsgrad von 4 bis 12 besteht.

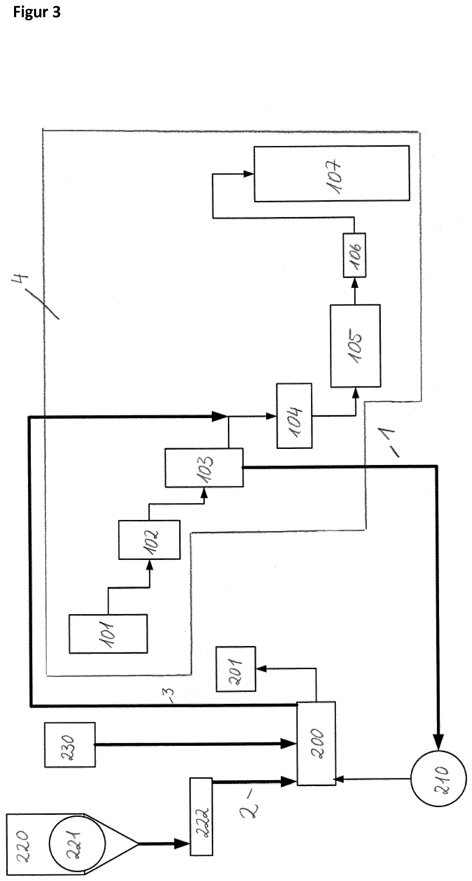

Figur 3 zeigt ein Fließbild für eine dritte Ausführungsvariante des erfindungsgemäßen Verfahrens, bei dem der Zwischenproduktstrom aus dem Präpolykondensationsreaktor abgezweigt wird und demnach aus dem Präpolymer mit einem Polykondensationsgrad von 20 bis 50 enthält.

**Patentansprüche**

1. Verfahren zur Herstellung eines Polyesters unter Verwendung von Polyester-Rezyklat-Flakes umfassend die folgenden Schritte:

    i. Abzweigen eines Zwischenproduktstroms (1) aus einer Zwischenstufe eines Frischpolyester-Herstellverfahrens vor dem Filtrationsschritt und vor der Nachkondensation des Präpolymers in einem Endreaktor (104), wobei das den Zwischenproduktstrom (1) bildende Zwischenprodukt bei einer Temperatur oberhalb seines Schmelzpunktes vorliegt und Reste an freiem Diol enthält;
    ii. Mischen des Zwischenproduktstroms (1) mit Polyester-Rezyklat-Flakes in einem dynamischen Mischer (200);
    iii. Einspeisen der Mischung (3) in eine Folgestufe (102, 103, 104), die stromabwärts der Zwischenstufe angeordnet ist und/oder Rückführen der Mischung (3) in diejenige Reaktionsstufe (101, 102, 103), aus der der Zwischenproduktstrom (1) in Schritt i) entnommen wurde;
    iv. Umsetzen der Mischung (3) bis zu einem gewünschten Polykondensationsgrad;

    wobei in Schritt ii) maximal 60 % der Aufschmelzenergie erzeugt und/oder zugeführt wird, die zum Aufschmelzen aller Polyester-Rezyklat-Flakes erforderlich ist.

2. Verfahren gemäß einem der vorhergehenden Ansprüche, **dadurch gekennzeichnet, dass** die Polyester-Rezyklat-Flakes bei Eintritt in den dynamischen Mischer (200) eine mittlere Temperatur von 0 bis 200°C, bevorzugt von 30 bis 180°C, besonders bevorzugt von 100 bis 150°C aufweisen.

3. Verfahren gemäß einem der vorhergehenden Ansprüche, **dadurch gekennzeichnet, dass** dem Zwischenproduktstrom (1) vor Schritt ii) mindestens 40 % der Aufschmelzenergie zugeführt wird, wobei der Zwischenproduktstrom (1) während der Verweildauer in dem dynamischen Mischer (200) weniger als 40 % der Aufschmelzenergie an die Polyester-Rezyklat-Flakes überträgt.

4. Verfahren gemäß einem der vorhergehenden Ansprüche, **dadurch gekennzeichnet, dass** der Mischung (3) nach Schritt ii) mindestens 40 % der Aufschmelzenergie zugeführt wird.

5. Verfahren gemäß einem der vorhergehenden Ansprüche, **dadurch gekennzeichnet, dass** die Verweildauer des Zwischenproduktstroms (1) und der Polyester-Rezyklat-Flakes in dem dynamischen Mischer (200) maximal 60 Sekunden, bevorzugt maximal 40 Sekunden, besonders bevorzugt maximal 30 Sekunden, insbesondere maximal 20 Sekunden, beträgt.

6. Verfahren gemäß einem der vorhergehenden Ansprüche, **dadurch gekennzeichnet, dass** Schritt ii) bei einem absoluten Druck von 3 bis 100 mbar, bevorzugt von 20 bis 50 mbar, erfolgt.

7. Verfahren gemäß einem der vorhergehenden Ansprüche, **dadurch gekennzeichnet, dass** die Mischung (3) vor Erreichen des gewünschten Polykondensationsgrads, bevorzugt zu einem Zeitpunkt, an dem die Mischung (3) eine gemäß ASTM D-4603-03 gemessene intrinsische Viskosität von 0,25 bis 0,4 dL/g aufweist, filtriert wird, wobei bevorzugt Schwebstoffe mit einer Größe von 5 bis 100 $\mu$m, insbesondere Schwebstoffe mit einer Größe von 10 bis 60 $\mu$m, abgetrennt werden.

8. Verfahren gemäß einem der vorhergehenden Ansprüche, **dadurch gekennzeichnet, dass** der gewünschte Polykondensationsgrad 100 bis 200, bevorzugt 120 bis 150, beträgt und/oder die bis zu dem gewünschten Polykondensationsgrad umgesetzte Mischung (3) eine gemäß ASTM D-4603-03 gemessene intrinsische Viskosität von 0,6 bis 0,9 dL/g aufweist.

9. Verfahren gemäß einem der vorhergehenden Ansprüche, **dadurch gekennzeichnet, dass** in Schritt i) 10 bis 100 % des gesamten Stroms in der Zwischenstufe als Zwischenproduktstrom (1) abgezweigt werden.

10. Verfahren gemäß einem der vorhergehenden Ansprüche, **dadurch gekennzeichnet, dass** der Zwischenproduktstrom (1) ein Diol enthält, bevorzugt Ethylenglykol, besonders bevorzugt in einem Anteil von 0 bis 0,8 Gew.-%, insbesondere in einem Anteil von 0 - 0,4 Gew.- %.

11. Verfahren gemäß einem der vorhergehenden Ansprüche, **dadurch gekennzeichnet, dass** die Mischung 5 bis 60 Gew.-%, bevorzugt 10 bis 40 Gew.-% Polyester-Rezyklat-Flakes enthält.

12. Verfahren gemäß einem der vorhergehenden Ansprüche, **dadurch gekennzeichnet, dass** der Zwischenproduktstrom (1) und die Polyester-Rezyklat-Flakes im dynamischen Mischer (200) zusätzlich noch mit einem Additiv ausgewählt aus der Gruppe bestehend aus Katalysatoren, Stabilisatoren, Farbstoffen, Mattierungsmitteln, optischen Aufhellern und Mischungen hiervon, gemischt werden, wobei das Additiv in einem Anteil von maximal 5 Gew.-% bezogen auf die resultierende Mischung eingesetzt wird.

13. Vorrichtung zur Herstellung eines Polyesters unter Verwendung von Polyester-Rezyklat-Flakes umfassend

- eine Vorrichtung zur Herstellung von Frischpolyester (4) mit mehreren aufeinanderfolgenden Reaktionsbehältern (101, 102, 103) und
- einen dynamischen Mischer (200),
wobei der dynamische Mischer (200) mindestens zwei Einlässe aufweist, von denen ein erster Einlass mit einem ersten Reaktionsbehälter (101) verbunden ist und ein zweiter Einlass mit einer Vorrichtung zur Dosierung von Schüttgut (222) verbunden ist, und
wobei ein Auslass des dynamischen Mischers (200) mit einem zweiten nachfolgenden Reaktionsbehälter (102) verbunden ist.

14. Vorrichtung gemäß Anspruch 13, **dadurch gekennzeichnet, dass** die Vorrichtung weiterhin eine Apparatur zum Zerkleinern von Polyester-Rezyklat umfasst, die der Vorrichtung zur Dosierung von Schüttgut (222) vorgeschaltet ist.

15. Vorrichtung gemäß einem der Ansprüche 13 oder 14, **dadurch gekennzeichnet, dass** die Vorrichtung weiterhin mindestens einen Wärmetauscher (210) umfasst, wobei ein erster Wärmetauscher bevorzugt zwischen der Apparatur zum Zerkleinern von Polyester-Rezyklat und der Vorrichtung zur Dosierung von Schüttgut (222) angeordnet ist und ein zweiter Wärmetauscher bevorzugt zwischen dem ersten Reaktionsbehälter (101) und dem dynamischen Mischer (200) angeordnet ist.

16. Vorrichtung gemäß einem der Ansprüche 13 bis 15, **dadurch gekennzeichnet, dass** mindestens eine Vorrichtung zur Erzeugung eines Vakuums (201) an den dynamischen Mischer (200) angeschlossen ist.

17. Verwendung der Vorrichtung gemäß einem der Ansprüche 13 bis 16 zur stofflichen Verwertung von Polyesterabfällen.

**Claims**

1. Process for producing a polyester using recycled polyester flakes, comprising the following steps:

    i. branching off an intermediate product stream (1) from an intermediate stage in a virgin polyester production process upstream of the filtration step and upstream of the postcondensation of the prepolymer in a final reactor (104), wherein the intermediate product forming the intermediate product stream (1) is at a temperature above its melting point and contains residues of free diol;

ii. mixing the intermediate product stream (1) with recycled polyester flakes in a dynamic mixer (200);

iii. feeding the mixture (3) into a downstream stage (102, 103, 104) downstream of the intermediate stage and/or recycling the mixture (3) into that reaction stage (101, 102, 103) from which the intermediate product stream (1) has been taken in step i);

iv. converting the mixture (3) up to a desired level of polycondensation;

wherein, in step ii), not more than 60% of the melting energy required to melt all the recycled polyester flakes is generated and/or supplied.

2. Process according to Claim 1, **characterized in that** the recycled polyester flakes, on entry into the dynamic mixer (200), have an average temperature of 0 to 200°C, preferably of 30 to 180°C, more preferably of 100 to 150°C.

3. Process according to either of the preceding claims, **characterized in that** the intermediate product stream (1) is supplied with at least 40% of the melting energy prior to step ii), wherein the intermediate product stream (1) transfers less than 40% of the melting energy to the recycled polyester flakes during the dwell time in the dynamic mixer (200).

4. Process according to any of the preceding claims, **characterized in that** the mixture (3) is supplied with at least 40% of the melting energy after step ii).

5. Process according to any of the preceding claims, **characterized in that** the dwell time of the intermediate product stream (1) and the recycled polyester flakes in the dynamic mixer (200) is not more than 60 seconds, preferably not more than 40 seconds, more preferably not more than 30 seconds, especially not more than 20 seconds.

6. Process according to any of the preceding claims, **characterized in that** step ii) is effected at an absolute pressure of 3 to 100 mbar, preferably of 20 to 50 mbar.

7. Process according to any of the preceding claims, **characterized in that** the mixture (3), prior to attainment of the desired degree of polycondensation, preferably at a time at which the mixture (3) has an intrinsic viscosity measured to ASTM D-4603-03 of 0.25 to 0.4 dL/g, is filtered, preferably removing suspended matter having a size of 5 to 100 $\mu$m, especially suspended matter having a size of 10 to 60 $\mu$m.

8. Process according to any of the preceding claims, **characterized in that** the desired degree of polycondensation is 100 to 200, preferably 120 to 150, and/or the mixture (3) converted up to the desired degree of polycondensation has an intrinsic viscosity measured to ASTM D-4603-03 of 0.6 to 0.9 dL/g.

9. Process according to any of the preceding claims, **characterized in that**, in step i), 10% to 100% of the overall stream is branched off as intermediate product stream (1) at the intermediate stage.

10. Process according to any of the preceding claims, **characterized in that** the intermediate product stream (1) contains a diol, preferably ethylene glycol, more preferably in a proportion of 0% to 0.8% by weight, especially in a proportion of 0-0.4% by weight.

11. Process according to any of the preceding claims, **characterized in that** the mixture contains 5% to 60% by weight, preferably 10% to 40% by weight, of recycled polyester flakes.

12. Process according to any of the preceding claims, **characterized in that** the intermediate product stream (1) and the recycled polyester flakes in the dynamic mixer (200) are additionally mixed with an additive selected from the group consisting of catalysts, stabilizers, dyes, flatting agents, optical brighteners and mixtures thereof, using the additive in a proportion of not more than 5% by weight based on the resulting mixture.

13. Apparatus for producing a polyester using recycled polyester flakes, comprising

- an apparatus for producing virgin polyester (4) having multiple successive reaction vessels (101, 102, 103) and
- a dynamic mixer (200),

wherein the dynamic mixer (200) has at least two inlets, of which a first inlet is connected to a first reaction vessel (101) and a second inlet is connected to an apparatus for dosage of bulk material (222), and
wherein an outlet of the dynamic mixer (200) is connected to a second downstream reaction vessel (102).

14. Apparatus according to Claim 13, **characterized in that** the apparatus further comprises an apparatus for comminution of recycled polyester which is connected upstream of the apparatus for dosage of bulk material (222).

15. Apparatus according to either of Claims 13 and 14, **characterized in that** the apparatus further comprises at least one heat exchanger (210), where a first heat exchanger is preferably disposed between the apparatus for comminution of recycled polyester and the apparatus for dosage of bulk material (222) and a second heat exchanger is preferably disposed between the first reaction vessel (101) and the dynamic mixer (200).

16. Apparatus according to any of Claims 13 to 15, **characterized in that** at least one apparatus for generating a reduced pressure (201) is connected to the dynamic mixer (200).

17. Use of the apparatus according to any of Claims 13 to 16 for physical utilization of polyester wastes.


**Revendications**

1. Procédé pour la préparation d'un polyester avec utilisation de paillettes de polyester recyclé, comprenant les étapes suivantes :

   i. dérivation d'un flux de produit intermédiaire (1) à partir d'un étage intermédiaire d'un procédé de préparation de polyester frais avant l'étape de filtration et avant la post-condensation du prépolymère dans un réacteur final (104), le produit intermédiaire formant le flux de produit intermédiaire (1) se trouvant à une température supérieure à son point de fusion et contenant des restes de diol libre ;
   ii. mélange du flux de produit intermédiaire (1) avec les paillettes de polyester recyclé dans un mélangeur dynamique (200) ;
   iii. injection du mélange (3) dans un étage consécutif (102, 103, 104), qui est agencé en aval de l'étage intermédiaire et/ou recyclage du mélange (3) dans l'étage de réaction (101, 102, 103) dont le flux de produit intermédiaire (1) a été prélevé dans l'étape i) ;
   iv. transformation du mélange (3) jusqu'à un degré de polycondensation souhaité ;

   où, dans l'étape ii), au maximum 60% de l'énergie de fusion, nécessaire pour la fusion de toutes les paillettes de polyester recyclé, sont générés et/ou introduits.

2. Procédé selon l'une quelconque des revendications précédentes, **caractérisé en ce que** les paillettes de polyester recyclé présentent, à l'entrée du mélangeur dynamique (200), une température moyenne de 0 à 200°C, de préférence de 30 à 180°C, de manière particulièrement préférée de 100 à 150°C.

3. Procédé selon l'une quelconque des revendications précédentes, **caractérisé en ce que** le flux de produit intermédiaire (1) est alimenté, avant l'étape ii), en au moins 40% de l'énergie de fusion, le flux de produit intermédiaire (1) transférant, pendant la durée de séjour dans le mélangeur dynamique (200) moins de 40% de l'énergie de fusion aux paillettes de polyester recyclé.

4. Procédé selon l'une quelconque des revendications précédentes, **caractérisé en ce que** le mélange (3) est alimenté, après l'étape ii), en au moins 40% de l'énergie de fusion.

5. Procédé selon l'une quelconque des revendications précédentes, **caractérisé en ce que** la durée de séjour du flux de produit intermédiaire (1) et des paillettes de polyester recyclé dans le mélangeur dynamique (200) est d'au maximum 60 secondes, de préférence d'au maximum 40 secondes, de manière particulièrement préférée d'au maximum 30 secondes, en particulier d'au maximum 20 secondes.

6. Procédé selon l'une quelconque des revendications précédentes, **caractérisé en ce que** l'étape ii) est réalisée à une pression absolue de 3 à 100 mbars, de préférence de 20 à 50 mbars.

7. Procédé selon l'une quelconque des revendications précédentes, **caractérisé en ce que** le mélange (3) est filtré avant d'atteindre le degré de polycondensation souhaité, de préférence à un moment où le mélange (3) présente une viscosité intrinsèque, mesurée selon la norme ASTM D-4603-03, de 0,25 à 0,4 dl/g, les matières en suspension présentant de préférence une grosseur de 5 à 100 μm, en particulier une grosseur de 10 à 60 μm, étant de préférence séparées.

8. Procédé selon l'une quelconque des revendications précédentes, **caractérisé en ce que** le degré de polycondensation souhaité est de 100 à 200, de préférence de 120 à 150 et/ou le mélange (3) transformé jusqu'au degré de polycondensation souhaité présente une viscosité intrinsèque, mesurée selon la norme ASTM D-4603-03, de 0,6 à 0,9 dl/g.

9. Procédé selon l'une quelconque des revendications précédentes, **caractérisé en ce que**, dans l'étape i), 10 à 100% du flux total sont dérivés dans l'étage intermédiaire en tant que flux de produit intermédiaire (1) .

10. Procédé selon l'une quelconque des revendications précédentes, **caractérisé en ce que** le flux de produit intermédiaire (1) contient un diol, de préférence de l'éthylèneglycol, de manière particulièrement préférée en une proportion de 0 à 0,8% en poids, en particulier en une proportion de 0-0,4% en poids.

11. Procédé selon l'une quelconque des revendications précédentes, **caractérisé en ce que** le mélange contient 5 à 60% en poids, de préférence 10 à 40% en poids de paillettes de polyester recyclé.

12. Procédé selon l'une quelconque des revendications précédentes, **caractérisé en ce que** le flux de produit intermédiaire (1) et les paillettes de polyester recyclé sont en outre encore mélangés dans le mélangeur dynamique (200) avec un additif choisi dans le groupe constitué par les catalyseurs, les stabilisants, les colorants, les agents matifiants, les azurants optiques et leurs mélanges, l'additif étant utilisé en une proportion d'au maximum 5% en poids, par rapport au mélange résultant.

13. Dispositif pour la préparation d'un polyester avec utilisation de paillettes de polyester recyclé, comprenant

    - un dispositif pour la préparation de polyester frais (4) comportant plusieurs récipients de réaction (101, 102, 103) successifs et
    - un mélangeur dynamique (200),
    le mélangeur dynamique (200) présentant au moins deux entrées, dont une première entrée est reliée à un premier récipient de réaction (101) et une deuxième entrée est reliée à un dispositif pour le dosage de matière en vrac (222) et
    une sortie du mélangeur dynamique (200) étant reliée à un deuxième récipient de réaction (102) consécutif.

14. Dispositif selon la revendication 13, **caractérisé en ce que** le dispositif comprend en outre un appareil pour le broyage du polyester recyclé, qui est disposé en amont du dispositif pour le dosage de matériau en vrac (222) .

15. Dispositif selon l'une quelconque des revendications 13 ou 14, **caractérisé en ce que** le dispositif comprend en outre au moins un échangeur de chaleur (210), un premier échangeur de chaleur étant de préférence agencé entre l'appareil pour le broyage du polyester recyclé et le dispositif pour le dosage du matériau en vrac (222) et un deuxième échangeur de chaleur étant de préférence agencé entre le premier récipient de réaction (101) et le mélangeur dynamique (200) .

16. Dispositif selon l'une quelconque des revendications 13 à 15, **caractérisé en ce qu'**au moins un dispositif pour générer un vide (201) est raccordé au mélangeur dynamique (200).

17. Utilisation du dispositif selon l'une quelconque des revendications 13 à 16 pour le recyclage de déchets de polyester.

**Figur 1**

EP 3 755 743 B1

Figur 2

16

**Figur 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0942035 A2
- EP 2021116 B1
- JP 2002249557 A
- EP 1461379 B1
- JP 10101784 A
- EP 1448658 A